# EUROPEAN PATENT APPLICATION

(11) **EP 1 146 710 A1**
(43) Date of publication of application: **17.10.2001**
(21) Application number: 00107070.5
(22) Date of filing: 04.04.2000
(51) Int. Cl.: H04L 29/06

(54) **Network image communication system**

(71) Applicant: Tornado Technologies Co., Ltd., Taipei (TW)
(72) Inventor: Chao, Kuo-Jen, Yung-Kang City, Tainan Hsien (TW)
(74) Representative: Bauer, Robert, Dipl.-Ing.

(57) **Abstract**

An Internet web server (10) is connected to a destination computer (20) via a network (30). The web server (10) has at least a web page (16, 60) and an image reduction program (14). The image reduction program (14) is used to shrink a digital image file (19). When the destination computer (20) requests the web page (16, 60) from the server (10), the server (10) will instead send a new web page (40, 70) which has the references (17) to graphics files changed to new references (47). These new references (47) point to reductions of the original graphics files, the reductions being made by the image reduction program (14). Additionally, these reductions will have hyperlinks (49) associated with them so that the user can click on the reduced image (76) to view the original image (66).

## Description

The present invention relates to a Network image communication system according to the pre-characterizing clause of claim 1.

In a corresponding prior art Network image communication system the web pages commonly involve large amounts of graphical information. Transmitting such amounts of information places a strain on communication bandwidths translating into delays. One solution is to substitute a box with a button for the actual image contained in a file. The box, however, has little or no meaning. The user might prefer to wait for the full set of web page-related data to come in.

This in mind, the present invention aims at providing a system for more quickly viewing web pages by speeding the transmission of digital image file data to a destination computer.

This is achieved by a Network image communication system according to claim 1. The dependent claims pertain to corresponding further developments and improvements.

As will be seen more clearly from the detailed description following below, the claimed system uses an image reduction program to shrink the size of a digital image file. When a destination computer requests a web page from the server, reduced images will be sent instead of original images. Albeit in reduced form, the user can get an idea of the graphical contents of the web page. If the user whishes to see an image in its original state, the user need only click on its associated reduction.

In the following, the invention is further illustrated by way of example, taking reference to the accompanying drawings.
Thereof
Fig. 1 is a block diagram showing a Network image communication system according to the present invention,
Fig.2 is an operating block diagram of the system shown in Fig.1,
Fig.3 depicts an original web page,
Fig.4 depicts a new web page based on the original web page of Fig.3, and
Fig.5 depicts a web page that is displayed when the user clicks on a reduced image shown in Fig.4.

The past decade has shown an explosive growth in the Internet, most notably in the World Wide Web (WWW) . This increasing growth has also brought about increasingly sophisticated web pages, web pages which involve large amounts of graphical information.

Web pages embed this graphical information through references to digital image files. When a web browser requests a web page file from a server, it parses the file for references to digital image files. Based upon these references in the web page file, the browser may then make requests to the same, or another, server for the indicated digital image files. These digital image files can be quite large. Transmitting such large files places a strain on communication bandwidths. Such strains translate into delays, which are frustrating to the user.

One solution to this problem has been to opt for the browser to request digital image files only if explicitly instructed to do so by the user. Such a system typically involves substituting a box with a button for the actual image contained in the file. If the user then clicks on the button, the browser will make the request to download the required digital image file. As the file data comes in, the box is filled with the digital image data.

In principle this seems a reasonable method, but in practice it just leads to confusion. Many web pages consist predominantly of digital images. Under this system, a user is frequently presented with a jumble of boxes that present little or no meaning. Consequently, users generally avoid such extreme measures, preferring instead to wait for the full set of web page-related data to come in.

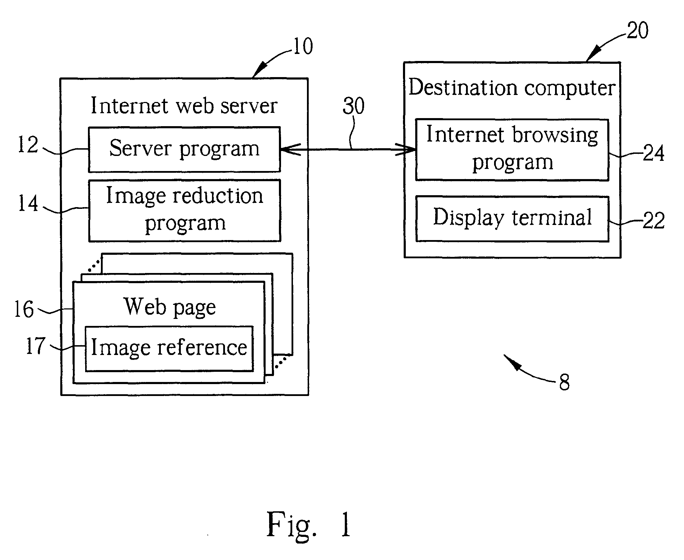

Please refer to Fig.1. Fig.1 depicts a Network image communication system 8 for more rapidly transmitting digital images in a web page according to the present invention. The Network image communication system 8 comprises an Internet web server 10, a destination computer 20 and a communications network 30. The Internet web server 10 and the destination computer 20 use the communications network 30 to exchange information. In its broadest form, the communications network 30 could be the Internet. The communications network 30 could also be a local area network (LAN) comprising two or more networking devices, i.e., an Intranet.

The destination computer 20 comprises a display terminal 22 and an Internet browsing program 24. For the present discussion, the destination computer 20 may be considered a standard personal computer properly configured with one of many commercially available Internet browsers. However, it should be clear to those skilled in the art that the destination computer 20 could also be any other browser-enabled computing device, i.e., a television set-top box, a personal data assistant (PDA), or even a cellular telephone.

The Internet browsing program 24 uses the display terminal 22 to show web pages to the user, and to receive user input. Generally, such input consists of a so-called "click". When the user clicks on a hyperlink, the browser will attempt to download the information referenced by the hyperlink. All of this is well known in the art.

The Internet web server 10 comprises a server program 12, an image reduction program 14, and at least one original web page 16. For the following discussion, the web page is assumed to have at least one image reference 17, and is assumed to comprise a series of hypertext markup language (HTML) commands. The image reference 17 indicates the source path of an original digital image file (not shown in Fig. 1) , and this file makes up at least part of the pictorial information in the web file. The original digital image file may reside on the Internet web server 10, or it may reside on another server.

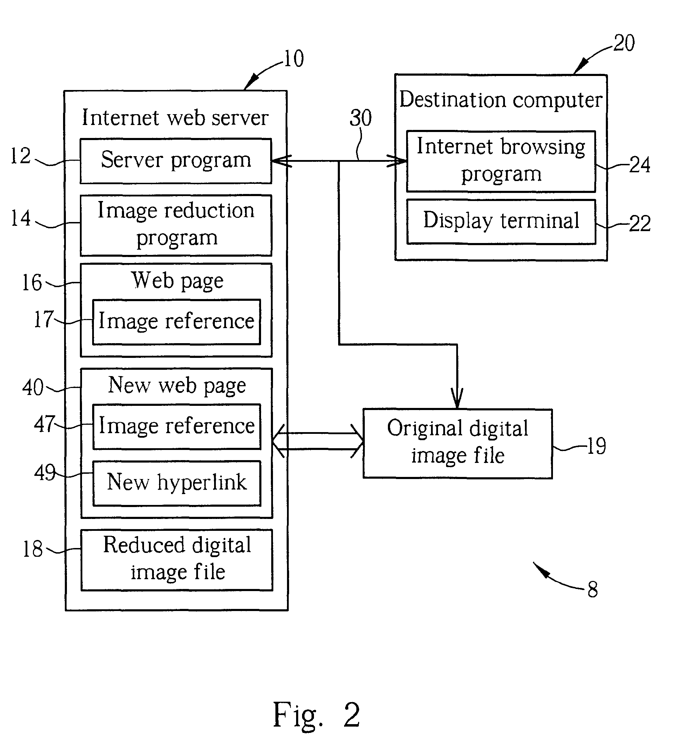

Please refer to Fig.2. Fig.2 depicts the system 8 in operation. When the Internet browsing program 24 requests the original web page 16 from the Internet web server 10, the following steps occur:
1. The server program 12 parses the web page 16 for any image references. In this case, it finds the image reference 17, which points to an original digital image file 19. The image file 19 may or may not reside on the server 10. If the original digital image file 19 does not reside on the server 10, then it is accessed via the network 30.
2. The contents of the original digital image file 19 are fed into the image reduction program 14. The image reduction program 14 produces a reduced digital image file 18. This reduced image file 18 looks much like the original digital image file 19, except that its dimensions have been reduced, i.e., it is a thumbnail of the original digital image file 19.
3. The server program builds a new web page 40. The new web page 40 is similar to the original web page 16 except that the image reference 17 has been replaced by an image reference 47, and a new hyperlink 49 is associated with this image reference 47. The image reference 47 points to the reduced image file 18. The hyperlink 49 is used to view the original digital image file 19.
4. The new web page 40, instead of the requested web page 16, is transmitted to the destination computer 20 over the network 30.

As a consequence of this, upon requesting the original web page 16, the user instead ends up viewing the new web page 40. The new web page 40 is similar to the original web page 16, except that some or all of the graphical images in it have been reduced in size. Some images, due to their already small size, may not need to be reduced. Larger images, however, should be reduced. This size reduction significantly reduces the downloading time. Nevertheless, the user can still see an accurate representation of the images of the original web page 16.

If a user wishes to see the original digital image file 19, he or she need merely click on its reduced image in the new web page 40 to trigger the hyperlink 49. This causes the server 10 to send the original digital image file 19 to the destination computer 20. The destination computer 20 may launch a new Internet browsing program to display the original digital image file 19, or it may display it in a separate web page that is blank but for the image contained in the original digital data file 19.

The above discussion is somewhat complicated by the fact that the original web page 16 may additionally have one, or several, hyperlinks associated with the image reference 17. These links are necessarily not present in the new web page 40, as they are replaced by the hyperlink 49. However, upon clicking the hyperlink 49, the original digital image file 19, and all its associated hyperlinks, will be presented to the user.

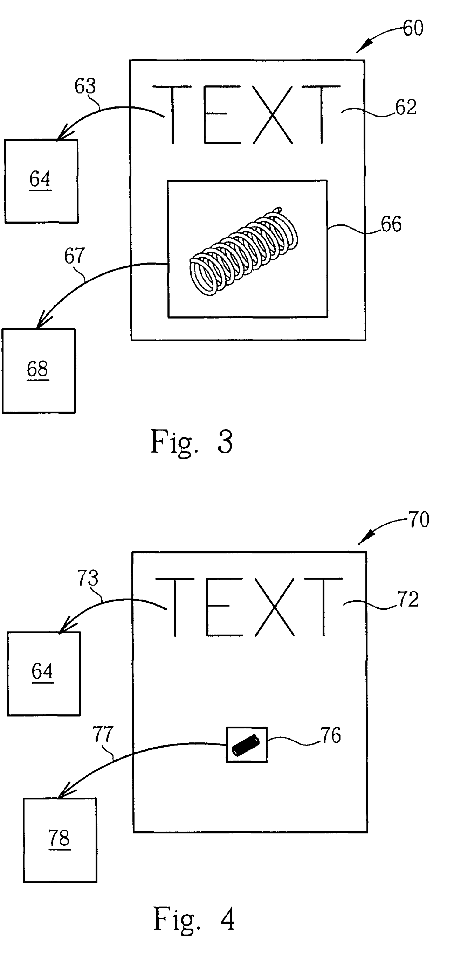

Consider the case in Fig.3. Fig.3 depicts a simple, original web page 60. The original web page 60 comprises text 62, and an original image 66. The text 62 has a hyperlink 63 associated with it that points to another web page 64. The original image 66 has a hyperlink 67 associated with it that points to a different web page 68.

Please refer to Fig.4. Fig.4 depicts the new web page 70 that is sent to a destination computer when it requests the original web page 60 from a server system of the present invention. The new web page 70 is similar to the original web page 60 of Fig.3 except that the relatively large digital image 66 has been replaced by its reduced image 76. The hyperlink 73 associated with the text 72 points to the same web page 64. However, the hyperlink 77 associated with the reduced image 76 is different, pointing to a new resource 78.

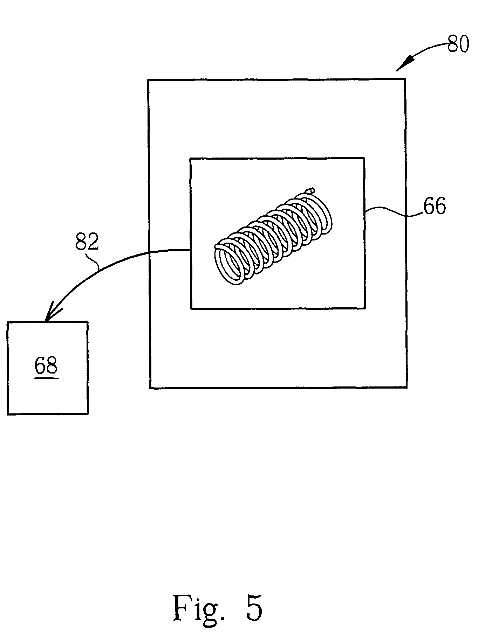

Please refer to Fig.5. Fig.5 depicts a web page 80 that is displayed to the user when he or she clicks on the reduced image 76 of Fig.4, triggering its hyperlink 77. The original image 66 is displayed, with a hyperlink 82 associated with it. The hyperlink 82 is the same as the hyperlink 67 originally associated with the original image 66 of the original web page 60, and so it points to the same web page 68. Hence, by clicking on a reduced image, a user can restore all of the original information that was contained in the original web page 60.

Although the above discussion has, for the sake of simplicity, limited itself to the case of a single image reference in the original web page, it must be understood that the present invention is in no way so limited. Indeed, it should be obvious to those skilled in the art that, to be useful, the present invention must work in the general case of an original web page with a multiplicity of image references and hyperlinks associated with those references. Also, the web pages may or may not comprise text, references to other resources (i.e., Java programs), or additional hyperlinks.

The present invention processes a request for an original web page, returning a new web page where all of the original digital image file references have been replaced by references to their corresponding reduced digital image files, as made by the image reduction program, if such reductions are deemed necessary. Each of these references to a reduced image will have its appropriate hyperlink so that the user may view the corresponding original image. When viewing the original image, all hyperlinks associated with that original image will also be restored. Other resources, such as text, appear in as similar a manner as possible in the new web page as in the original web page.

Please refer back to Fig.2. When converting the original digital image file 19 into the reduced digital image file 18, the image reduction program 14 considers two distinct types of image files: static and dynamic.

A static image file comprises a single digital image, and this image is shown on the display terminal 22. A dynamic image file comprises a plurality of image frames. Each of these image frames is a single digital image. However, the frames are displayed sequentially and repetitively on the display terminal 22 by the Internet browsing program 24. This creates an animated effect, and such dynamic files are typically called animation files.

The present invention, as explained above, simply reduces the single frame of a static image file to create the reduced digital image file 18. In the case of an animation file, however, the image reduction program 14 selects one of the frames in the animation file, and reduces it as it would a static image to create the reduced digital image file. Consequently, when the new web page 40 is viewed on the display terminal 22, rather seeing a dynamic reduced image, a static reduced image will be presented. When the hyperlink associated with this reduced image is triggered, though, the complete animation file will be displayed, in its animated form.

Of course, it would also be possible for the image reduction program 14 to make a corresponding reduced image animation file for an original animation file. In such a case, rather than seeing a single, reduced frame of the original animation file in the new web page 40, one would see a reduced animated picture; that is, a multiplicity of reduced frames would be sequentially presented to the user by the Internet browsing program 24, creating a thumbnail animated version 18 of the original animated file 19.

Finally, it should be noted that the present invention permits the user to specify the amount of reduction he or she wishes, or to turn the reduction off completely so as to view the original web pages directly. This option is supplied via a user-interface web page on the Internet web server 10. Using this web page, the user selects how much, if any, image reduction should be performed. The server then remembers these particular parameters of the user, and behaves accordingly.

The Network image communication system 8 significantly decreases the time required to download a web page by creating a new web page from a requested original. The new web page is similar to the original web page but for the image references, and their associated hyperlinks. The original images, and their references, are replaced with references to corresponding reduced images. These reduced images are sent to the destination computer, thus reducing the total amount of information sent from the server to the destination computer. This reduces the amount of time required to view the web page. The original images, and hyperlinks associated with them, can be viewed by triggering the hyperlinks of their corresponding reduced images in the new web page.

## Claims

1. A Network image communication system (8) comprising:
- an Internet web server (10) containing a server program (12) and at least one original web page (16, 60), the original web page (16, 60) containing an image reference (17) to an original digital image file (19), and
- at least one destination computer (20) connected to the web server (10) through a communications network (30), the destination computer (20) containing a display terminal (22) for displaying text (62, 72) and images (66, 76), and an Internet browsing program (24) for communicating with the server program (12) of the server (10) through the communications network (30) and displaying any web page sent from the server program (12) on the display terminal (22),
**characterized in**
**that** the Internet web server (10) further comprises an image reduction program (14) for shrinking the original digital image file (19) referenced by the original web page (16, 60) in a predetermined manner into a reduced digital image file (18) which looks similar to the original digital image file (19) but smaller in size,
that the server program (12) is used to generate a new web page (40, 70) according to the original web page (16, 60), that the new web page (40, 70) comprises an image reference (47) referencing the reduced digital image file (18) instead of the original digital image file (19), and a hyperlink (49) associated with the image reference (47) in the new web page (40, 70) to the reduced digital image file (18), and
that when the browsing program (24) of the destination computer (20) sends a request to the server program (12) of the web server (10) asking for the original web page (16, 60), the server program (12) sends the new web page (40, 70) instead of the original web page (16, 60) to the browsing program (24), the browsing program (24) displays the new web page (40, 70) which contains an image reference (47) to the reduced digital image file (18) on the display terminal (22), and when a user of the destination computer (20) triggers the hyperlink (49) associated with the reference (47) to the reduced digital image file (18), the server program (12) will transmit a web page (80) that contains a reference to the original digital image file (19) to the destination computer (20) and the browsing program (24) will then display the original digital image file (19) on the display terminal (22).

2. The system (8) of claim 1 wherein the image reduction program (14) is initiated by the server program (12) to shrink the original digital image file (19) into the reduced digital image file (18) after the server program (12) receives the request for the original web page (16, 60) from the browsing program (24).

3. The system (8) of claim 1 wherein the original digital image file (19) is an animation file that comprises a plurality of digital image frames, and the reduced digital image file (18) is produced from one of the digital image frames of the original digital image file (19).

4. The system (8) of claim 1 wherein both the original and new web pages (16, 40, 60, 70) are in an HTML (hypertext markup language) file format.
